Europäisches Patentamt

European Patent Office

Office européen des brevets

(19)

(11) **EP 1 604 839 A1**

(12) **EUROPEAN PATENT APPLICATION**
published in accordance with Art. 158(3) EPC

(43) Date of publication:
**14.12.2005 Bulletin 2005/50**

(51) Int Cl.⁷: **B60C 17/00**, B60C 15/06,
B60C 15/00, B60C 9/22,
B60C 15/02

(21) Application number: **04720253.6**

(22) Date of filing: **12.03.2004**

(86) International application number:
**PCT/JP2004/003320**

(87) International publication number:
**WO 2004/080730 (23.09.2004 Gazette 2004/39)**

(84) Designated Contracting States:
**AT BE BG CH CY CZ DE DK EE ES FI FR GB GR
HU IE IT LI LU MC NL PL PT RO SE SI SK TR**
Designated Extension States:
**AL LT LV MK**

(30) Priority: **14.03.2003 JP 2003070250
18.11.2003 JP 2003387632**

(71) Applicant: **Bridgestone Corporation
Tokyo 104-8340 (JP)**

(72) Inventors:
• **Maehara, Daisuke,**
c/o Bridgestone Corp Tech. Cent.
**Kodaira-shi, Tokyo 1878531 (JP)**
• **Zuigyou, Yugo,**
c/o Bridgestone Corp Techn. Cent.
**Kodaira-shi, Tokyo 1878531 (JP)**
• **Iida, Hiroyuki, c/o Bridgestone Corp. Tech. Cent.
Kodaira-shi, Tokyo 1878531 (JP)**

(74) Representative: **Whalley, Kevin
Marks & Clerk
90 Long Acre
London WC2E 9RA (GB)**

(54) **PNEUMATIC TIRE AND METHOD OF MOUNTING THE SAME**

(57)     The present invention is to provide a runflat tire having an effectively improved runflat durability while continuously running under a runflat condition due to a low tire pressure or puncture, without sacrificing other characteristics such as riding comfort during an ordinal driving at normal internal pressure. A runflat tire 1 according to the first aspect comprises a belt 8 consisting of at least one rubber-coated cord layer laid between a crown portion of a carcass 7 and a tread portion 5, the carcass consisting of at least one ply toroidally extending bead portions 3, sidewall portions 4 and the tread portion; a reinforcing rubber 11 which has a generally crescent sectional shape and is arranged at the interior surface side at least of sidewall portions 4; and a ring-shaped rim guard portion 13 protruding outwardly in the tire's width direction arranged at the exterior surface position of the tire immediately above a rim flange Rf. The tire is characterized in that the rim guard portion 13 is formed by a hard rubber, and a 100% modulus of the hard rubber is not less than 3.0 MPa and within a range from two to five times as much as that of an outer skin rubber 14 constituting the sidewall portions 4.

FIG. 1

EP 1 604 839 A1

**Description**

TECHNICAL FIELD

The present invention relates to an effective improvement of runflat durability of a runflat tire while continuously running under a runflat condition due to a low tire pressure or a puncture, without sacrificing other characteristics such as riding comfort during an ordinal driving at normal internal pressure.

BACKGROUND ART

When a tire is continuously used under a runflat condition which is caused by a low tire pressure or a puncture, deflection and deformation of a sidewall portion of the tire become larger than those under an ordinal design pressure condition and thus tire failure often occurs at an early stage. Observing failure state of a general tire, the large deformation of the sidewall portion is likely to cause repeated contacts between portions on the interior surface of the tire, resulting wear and cut of the tire, or it is likely to disengage the tire from the rim in conjunction with large collapse deformation of a bead portion.

In order to address such failure, known as a runflat tire is a tire having enhanced rigidity of the sidewall portion, or having a specially fabricated bead and rim.

From a further examination of the failure state of the runflat tire, it is revealed that the deflection and deformation of the sidewall portion of the tire unavoidably become larger than those under an ordinal design pressure condition even in a tire whose rigidity is enhanced to prevent the contact inside the tire, and that stress concentrates on or near the maximum width position of the tire which becomes a nucleus of the failure.

Means for inhibit an occurrence of the nucleus of the failure have been suggested in which rubbers are laminated between a plurality of carcass plies or a reinforcing rubber having a specific shape is placed on the interior surface of the carcass (see, for example, JP 2000-168319 A, JP 2000-52724 A and JP 2000-190715 A). All of these means, however, involves an increased weight or a deterioration of production efficiency. In addition, rigidity in the tire's radial direction, i.e. a so-called longitudinal spring rate during an ordinal driving under a normal internal pressure condition is increased, so that the riding comfort is prone to be diminished. As such, it is difficult to effectively improve the runflat durability.

Meanwhile, a marker line or a step for clarifying a borderline is usually provided on a boundary between a so-called roadway over which vehicles travel and a so-called sidewalk exclusive for pedestrians. For the latter case, so-called curbstones are often placed.

When a vehicle comes in and out of a premise from/to a roadway or it is parked on the roadside, its tires may hit against the curbstones. In this case, the sidewall portion which has been largely bent is sandwiched between the curbstones and a tire rim to cause the cuts, which leads to getting punctured in the worst case. In addition, the rims of low-profile tires are apt to directly contact with the curbstones, so that the exterior surface of the rim is likely to be damaged and consequently the appearance may be greatly disfigured or the rim flange may be broken.

In order to prevent the tire and its rim from being damaged by the contact with obstacles such as the curbstones, a rim guard portion which is also referred simply to as a rim guard is provided on the sidewall portion of the tire, especially between the maximum width position of the tire and the bead portion in many cases.

The rim guard portion is provided mainly for preventing the exterior surface of the tire from directly contacting with the above-mentioned curbstones when the tire is used under the normal internal pressure, or for improving its aesthetics such as the appearance of the tire.

The present inventors focus on the above-mentioned rim guard portion as means for improving the runflat durability while keeping the increase of the longitudinal spring rate to the very least especially during an ordinal driving at normal internal pressure, and find that optimizing the rim guard is useful for this purpose.

Conventional tires having the rim guard portions for the purpose other than a prevention of cutting on the exterior surface of the sidewall portion or a prevention of a damage to the rim flange are disclosed in, for example, JP 11-157311 A, JP 53-138106 A and JP 2002-59713 A.

The tire disclosed in JP 11-157311 A is directed to an enhancement of the driving characteristics in a runflat state as well as an improvement of the durability of the bead portion. In this tire, a rim-slippage preventing layer consisting of a relatively soft rubber is provided at a position where the upper part of the rim flange of the rim guard portion stand opposite to each other, and the rest of the rum guard portion consists of hard rubber. However, the rubber constituting the rim guard portion of this tire is not specified in relation to the outer skin rubber constituting the sidewall portion. Although such a configuration may contribute to some effects of improvement to the runflat durability, it cannot provide sufficient runflat durability under a more severe runflat condition such as involving a side force.

The tire disclosed in JP 53-138106 A is intended to keep a sufficient withstand load and durability during runflat running without there happening such an accident as the rim slippage. In this tire, a high-rigidity reinforcement member (pseudo-bead) having a circular shape is embedded in the rim guard portion. However, the pseudo-bead is provided not for inhibiting the deflection of the sidewall portion. In addition, the tire has a problem in which the rubber portion of the bead portion, which is sandwiched between the rim flange and the pseudo-bead during runflat running, is prone to repeatedly and largely deforms to become a nucleus of the failure. Moreover, the longitudinal spring rate at the ordinal internal pressure is increased and thus the riding comfort tends to be deteriorated

The tire disclosed in JP 2002-59713 A is intended to improve both of low fuel consumption and cutting resistance of the sidewall without loss of the riding comfort. The rim guard of this tire consists of rubber in which short fibers made of an organic fiber are dispersed. The tire, however, is a pneumatic tire used with applying a normal internal pressure, but is not one having an improved runflat durability by providing a rim guard portion.

In view of the above-mentioned points, there is not such a technical solution of the runflat tire so far that can effectively increase the longitudinal spring rate during the runflat running and thus remarkably improve the runflat durability, while keeping the increase of the longitudinal spring rate to the very least during an ordinal driving at the normal internal pressure by optimizing the rim guard portion.

DISCLOSURE OF THE INVENTION

It is an object of the present invention to provide a runflat tire having an effectively improved runflat durability while continuously running under a runflat condition due to a low tire pressure or puncture, without sacrificing other characteristics especially such as riding comfort during an ordinal driving at normal internal pressure by optimizing a rim guard portion which also referred to as a rim guard and which is provided on the exterior surface of the sidewall portion of the tire for the purpose of preventing the tire and its rim from being damaged by the contact with obstacles such as the curbstones.

To achieve the above-mentioned objects, the first aspect of the present invention is a runflat tire comprising a belt consisting of at least one rubber-coated cord layer laid between a crown portion of a carcass and a tread portion, the carcass consisting of at least one ply toroidally extending over a pair of bead portions in which bead cores are embedded, a pair of sidewall portions extending radially outwardly from the bead portions, and a tread portion extending across the sidewall portions; a reinforcing rubber which has a generally crescent sectional shape and is arranged at the interior surface side at least of sidewall portions; and a ring-shaped rim guard portion protruding outwardly in the tire's width direction arranged at the exterior surface position of the tire immediately above a rim flange in a state where the tire is applied on a standard rim, the tire being characterized in that the rim guard portion is formed by a hard rubber, and a 100% modulus of the hard rubber is not less than 3.0 MPa and within a range from two to five times as much as that of an outer skin rubber constituting the sidewall portions.

The second aspect of the present invention has the same fundamental constitution as the first aspect, and is characterized in that at least one composite reinforcing layer consisting of a rubber containing reinforcing elements is arranged at a position adjacent to at least a part of a circumferential surface of the rim guard portion.

The third aspect of the present invention has the same fundamental constitution as the first aspect, and is characterized in that at least a part of the rim guard portion is formed by a hard rubber, a 100% modulus of the hard rubber is not less than 3.0 MPa and within a range from two to five times as much as that of a outer skin rubber constituting the sidewall portions, and at least one composite reinforcing layer consisting of a rubber containing reinforcing elements is arranged within the rim guard portion or at a position adjacent to at least a part of a circumferential surface of the rum guard portion.

The rim guard portion of the third aspect preferably has an inner rubbers section located in the inner side in the tire's width direction and consisting of a hard rubber, and an outer rubber section located in the outer side in the tire's width direction and consisting of a soft rubber.

In this case, the hard rubber constituting the inner rubber section preferably has a 100% modulus of not less than 3.0 MPa, and the soft rubber constituting the outer rubber section preferably has a 100% modulus of less than 3.0 MPa. The volume percent of the inner rubber section with respect to the entire rim guard portion is preferably not less than 40%. The inner rubber section is preferably formed by extending a rubber chafer to the radially outward direction, and the outer rubber section is preferably formed by extending the outer skin rubber constituting the sidewall portion to the radially inward direction. Moreover, the composite reinforcing layer is preferably placed between the inner and outer rubber sections.

In the second and third aspects, it is preferred that (i) the reinforcing elements constituting the composite reinforcing layer are nonwoven fabrics, (ii) the reinforcing elements constituting the composite reinforcing layer are filament fibers having a fiber diameter of 0.01-1 mm and a fiber length of not less than 1 mm, and/or (iii) the composite reinforcing layer is so disposed that it wraps around the outer circumferential surface of the rim guard portion.

In the first, second and third aspects, it is preferred that a pair of narrow reinforcing belts in which cords extends in parallel to the tire's circumferential direction are provided at positions each covering an end of the belt, and that a distance measured from a tread width end position to the inner end position of the narrow reinforcing belt along the tire's width direction is not less than 1/4 of the tread width. In addition, when a plurality of circumferential main groove extending along the tire's circumferential direction are provided on the tread portion, the narrow reinforcing belt is preferably so disposed that its inner end in the tire's width direction is laid inside from the width center line of the outermost circumferential main groove in the tire's width direction.

Further, in the first, second and third aspects, the tire is preferably a pneumatic tire comprising a carcass having at least one ply toroidally extending over a pair of bead portions in which bead cores are embedded, a pair of sidewall portions extending radially outwardly from the bead portions, and a tread portion extending across the sidewall portions. The tire is mounted on a regulated rim and is inflated by a given air pressure. In a cross section of the tire/wheel assembly taken along the tire's width direction under an unloaded condition, a ring-shaped rim guard portion projecting outwardly in the tire's width direction is provided within a specific area on the exterior surface of the tire, the area extending from the tire's maximum width position on the exterior surface to the highest position of the exterior surface which contacts the exterior surface of the rim flange. When an arc is drawn to circumscribe both the tire's maximum width position and the exterior surface of the rim flange and the arc is assumed as a reference arc approximating the contour of the exterior surface of the specific area (excluding the rim guard portion), a ratio of the minimum value to the maximum value of the thickness of the tire, which are measured on a plurality of normal lines perpendicular to the reference arc within the specific area, preferably range from 0.8 to 1.0, and the maximum height of the rim guard portion, which is the distance between the reference arc and the top face of the rim guard portion measured on the normal lines drawn from the reference arc, is preferably 0.52-1.40 times as much as the tire thickness measured on the same normal line as the maximum height.

As used herein, the terms "regulated rim" and "given air pressure" refer to a standard rim and a air pressure corresponding to the maximum load capability (maximum air pressure), respectively, specified JATMA (Japan Automobile Tire Manufacturers Association) YEAR BOOK (2002).

The maximum height of the rim guard portion is preferably restricted to be 0.58-1.20 times as much as the tire thickness measured on the same normal line, which range is narrower than the above-mentioned range.

The average height of the rim guard portion, which is obtained by dividing the sectional area of the rim guard portion in the cross section taken along the tire's width direction by the length of the bottom of the rim guard portion on the reference arc, is preferably not less than 0.6 times and less than 1.0 times as much as the maximum height of the rim guard portion.

The rim guard portion preferably has a generally trapezoidal or a generally triangle sectional shape. In the former case, it is more preferred that the top plane of the rim guard portion forms a flat surface and/or the length of the top plane of the rim guard portion in the cross section taken along the tire's width direction is 0.14-0.90 times as much as the above-mentioned length of the bottom.

A boundary portion between the exterior surface of the tire and the exterior circumferential surface of the rim guard portion preferably forms a smooth curve.

The reinforcing rubber preferably has a 100% modulus of not less than 4 MPa.

Further, at least one ply of the plies constituting the carcass preferably includes an organic fiber cord selected from the group consisting of 6-nylon, 66-nylon, polyethylene terephthalate, rayon, polyethylene naphthalate and aramid.

BRIEF DESCRIPTION OF THE DRAWINGS

FIG. 1 is a cross sectional view of the left half of the runflat tire according to the first aspect of the present invention;
FIG. 2 is a schematic diagram assuming that the specific area of the sidewall portion of the tire is a straight beam;
FIG. 3 is a schematic diagram assuming that the specific area of the sidewall portion and the rim guard portion provided on the entire specific area are straight beams;
FIG. 4 is a schematic diagram assuming that the specific area of the sidewall portion and the rim guard portion provided only on the section at the fixing portion side of the specific area are straight beams;
FIG. 5 is a cross sectional view of the left half of the runflat tire according to the second aspect of the present invention;
FIG. 6 is a cross sectional view of a principal part including the rim guard portion of the runflat tire according to the third aspect of the present invention;
FIG. 7 is a cross sectional view of a principal part including the rim guard portion of another runflat tire according to the third aspect of the present invention;
FIG. 8 shows another embodiment;
FIG. 9 shows another embodiment;
FIG. 10 shows another embodiment;

FIG. 11 shows another embodiment;

FIG. 12 shows another embodiment;

FIG. 13 shows another embodiment;

FIG. 14 shows another embodiment;

FIG. 15 is an illustration showing a deformation state of a conventional runflat tire during runflat running;

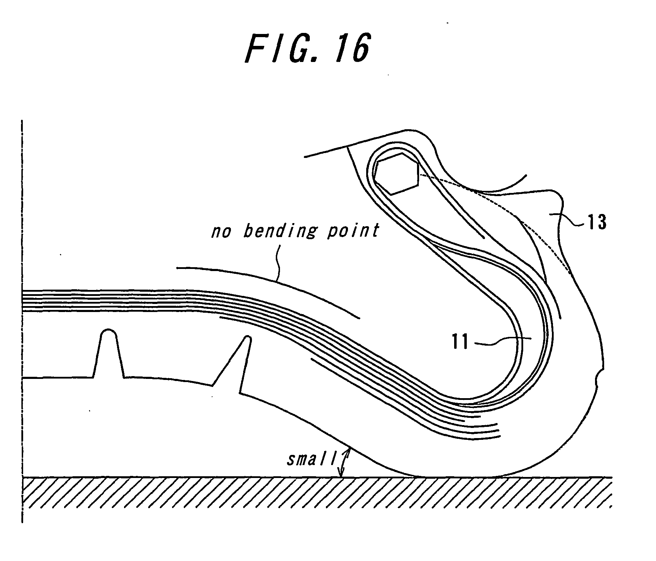

FIG. 16 is an illustration showing an example of a deformation state of a runflat tire according to the present invention during runflat running;

FIG. 17 shows another embodiment;

FIG. 18 is a sectional view of the rim guard portion when the sidewall portion of the runflat tire shown in FIG. 17 is developed; and

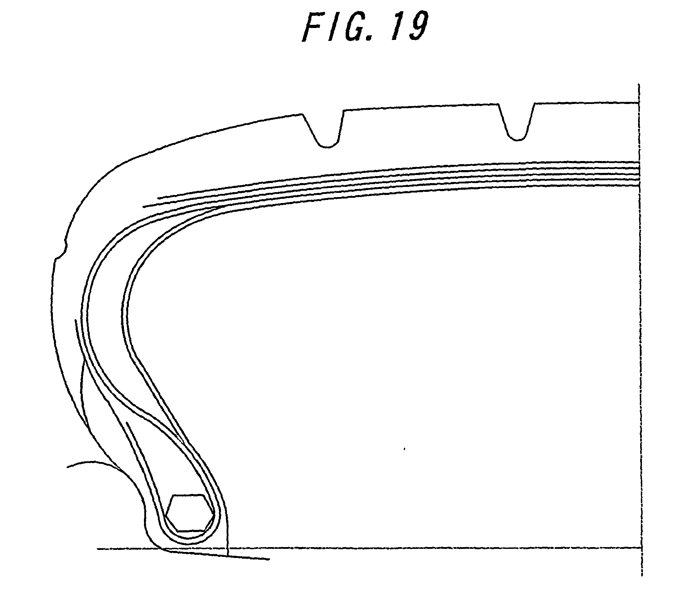

FIG. 19 is a cross sectional view of the left half of the conventional tire (Conventional Example).

## BEST MODE FOR CARRYING OUT THE INVENTION

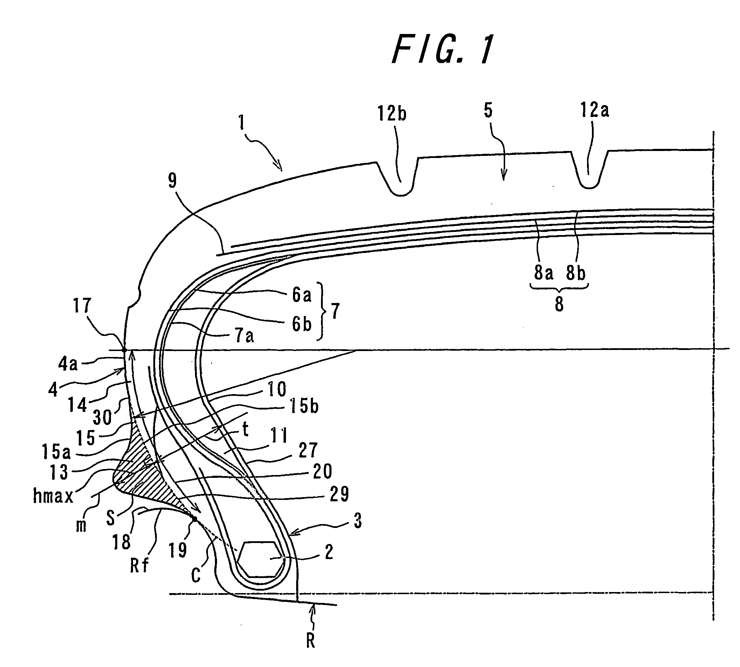

FIG. 1 is a cross sectional view of the left half of the runflat tire according to the first aspect of the present invention. The runflat tire 1 shown in FIG. 1 is provided with a carcass 7 consisting of at least one ply (in FIG. 1, two plies 6a, 6b) toroidally extending over a pair of bead portions 3 (only one of them is shown) in which bead cores 2 are embedded, a pair of sidewall portion 4 (only one of them is shown) extending radially outwardly from the bead portions 3, and a tread portion 5 extending across the sidewall portions 4.

Between a crown portion of the carcass 6 and the tread portion 5, there is provided a belt 8 consisting of at least one cord layer, and two cord layers 8a, 8b in FIG. 1. Further, a reinforcing rubber 11 having generally crescent sectional shape is provided at least on an interior surface side of sidewall portion 4, and between an interior surface 7a of the carcass and an inner liner 10 across the bead portion 3 and immediate underneath of an end portion of the belt 8 in FIG. 1. In this way, the tire has a configuration of a so-called reinforced sidewall type runflat tire.

In addition, although the tire 1 shown in FIG. 1 is provided with four circumferential main grooves 12a, 12b (only two main grooves are shown) extending along the tire's circumferential direction on the tread portion 5, the number of the main grooves 12a, 12b may be varied and other tread grooves such as not-shown transversal grooves and inclined grooves may be provided in various configurations as needed.

Moreover, a ring-shaped rim guard portion 13 projecting outwardly in the tire's width direction is arranged at the exterior surface position of the immediately above a rim flange Rf in a state where the tire is applied on a standard rim R.

A constitutional feature of the present invention is to optimize the rim guard portion 13 which is provided on an exterior surface 4a of the sidewall portion 4 of the tire 1 for the purpose of preventing the tire 1 and/or rim R from being damaged due to a contact with obstacles such as curbstones. More specifically, in the first aspect, the rim guard portion 13 is formed by a hard rubber, and a 100% modulus of the hard rubber is not less than 3.0 MPa and within a range from two to five times as much as that of an outer skin rubber 14 constituting the sidewall portion 4. In the second aspect, at least one composite reinforcing layer 16 consisting of a rubber containing reinforcing elements is arranged at a position adjacent to at least a part of a circumferential surface 15 of the rim guard potion 13. In the third aspect, at least a part of the rim guard portion 13 is formed by a hard rubber, a 100% modulus of the hard rubber is not less than 3.0 MPa and within a range from two to five times as much as that of a outer skin rubber constituting the sidewall portions 4, and at least one composite reinforcing layer 16 consisting of a rubber containing reinforcing elements is arranged within the rim guard portion 13 or at a position adjacent to at least a part of a circumferential surface of the rum guard portion 13.

With the above-mentioned constitutions, the first, second and third aspects of the present invention can improve runflat durability while continuously running under a runflat condition due to a low tire pressure or puncture, without sacrificing other characteristics especially such as riding comfort during an ordinal driving at normal internal pressure.

In the next, it will be discussed, along with its operation, how the above-mentioned constitution has been adopted to the present invention.

The present inventors analyzed conditions of broken tires in detail which have been subjected to continuous running under the runflat state due to a low tire pressure or puncture. As a result, it has been found in a reinforced sidewall type runflat tire having enhanced stiffness of the sidewall portion that a failure of the tire is rarely caused by a so-called bead unseating in which the rim portion comes off the rim, but a typical failure pattern is a breakdown from the maximum width position of the tire and its neighborhood as mentioned above. Such a breakdown seems to be caused because the deflection and deformation of the sidewall portion of the tire are larger than those under an ordinal designed internal pressure condition.

From the tread portion to the buttress portion, a belt having high stiffness is disposed and the gauge thickness is large, so that the stiffness there is high. The bead portion also has a high stiffness because it is provided with, in addition to a high-stiffness bead filler and a turned carcass ply, reinforcing members such as a chafer. Nevertheless, the sidewall portion, especially at the maximum width position of the tire and its neighborhood, is formed from small numbers of members and has small gauge thickness, so that the stiffness becomes relatively low. In an ordinal tire, interior surfaces of the tire repeatedly contact with each other due to insufficient stiffness of the sidewall portion, leading to the failure of the tire. In the reinforced sidewall type runflat tire, although the interior surfaces are prevented from contacting with each other, the amount of deformation at the maximum width position and its neighborhood remains at large and thus failures still occur there.

Accordingly, in order to improve the runflat durability while minimizing an increase of the tire weight and a decrease of the productivity, it is important that the tire is constructed without making a place of relatively small stiffness at the sidewall portion extending across the buttress portion and the bead portion, while the entire stiffness of the tire, so that the deflection and deformation at the maximum width position and its neighborhood are decreased.

Considering the deformation of the tire, a tread surface contacting the ground and a rim-engaging portion are presumed as fixed portions. The present inventors, however, further studied to suppress the deformation at the maximum width position of the tire and found that it is more effective to indirectly suppress the deformation at the maximum width position by enhancing the stiffness of the fixed portions which are roots of the deformation rather than to directly increase the gauge thickness at the maximum width position to enhance the stiffness. In this case, the neighborhood of the fixed portions is the buttress portion neighboring the tread portion and the bead portion. The present inventors reached an idea that enhancing the stiffness of the neighborhood of the bead portion, among others, fitting on the rim having remarkably higher stiffness than the tire can be effectively suppress the deformation at the maximum width direction. In addition, increasing the gauge thickness at the buttress portion and especially the maximum width portion results in a larger stiffness and inertial mass, which may deteriorate the riding comfort. On the contrary, increasing the gauge thickness is considered to involve these adverse effects.

The present inventors investigated means for effectively enhance the stiffness at the root (neighborhood) of the bead portion as the fixed portion, and found that optimizing the rim guard portion 13, which is referred to as a rim guard and is provided on the exterior surface of the sidewall portion of the tire for the purpose of preventing the tire and rim from being damaged by contacts with obstacles such as curbstones, may remarkably increase a bending stiffness of the bead portion 3, so that the deflection and deformation of the sidewall portion 4 during the runflat running are effectively suppressed to hardly cause the failure of the tire.

When the rim guard portion 13, however, is formed only by the hard rubber to enhance the stiffness of the bead portion 3, a longitudinal spring rate is increased especially under the normal inner pressure condition, resulting in deterioration in the tire uniformity as well as the riding comfort and vibration characteristics. Therefore, it is important that the rim guard portion 13 is so optimized that the function of enhancing the bending stiffness of the root of the bead portion 3 can be effectively exerted.

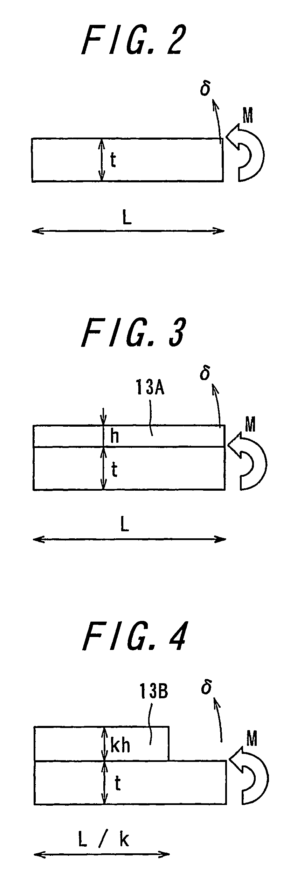

For the purpose of simplification, the side portion (its radial length is L) across a specific area 20 from the maximum width portion 17 to a highest portion 19 of the tire exterior surface contacting an exterior surface 18 of the rim flange is cut out by a circumferential unit length (e.g. 10 mm) as shown in FIG. 2. The side portion at the specific area 20 including the carcass plies and bead filler is assumed as a homogeneous straight beam having a uniform thickness t.

The bending stiffness is considered in a case where the rim guard portion 13 is provided on the entire region L of the above-mentioned straight beam with a thickness h as shown in FIG. 3, and in a case where the volume of the rim guard portion 13 remains the same and is provided on a region L/k which is 1/k times as long as the above-mentioned straight beam from the fixed end of the straight beam (where k is a number greater than 1) with a thickness kh as shown in FIG. 4.

Provided that each part of the beam has an identical property, the bending stiffness can be considered as a geometrical moment of inertia. By appropriately approximating and simplifying the construction formula, the geometrical moments of inertia of the beams in stacking states are obtained as follows;

$$I_0 = (1/12)\, t^3$$

$$I_1 = (1/12)\, t^3 + (1/12)\, h^3 + \{(t+h)/2\}^2\, h$$

$$I_2 = (1/12)\, t^3 + (1/12)\, (kh)^3 + \{(t+kh)/2\}^2\, kh$$

When the tire is deflected and deformed due to a load, a bending moment M acts on the maximum width position of the tire, so that amounts of bulging in the tire's axial direction (collapsing amounts) $\delta$ are as follows;

$$\delta_1 = (M/2EI_1)(L/k)^2 + (M/2EI_0)(L-L/k)^2 + (M/EI_1)(L-L/k)(L/k)$$

$$\delta_2 = (M/2EI_2) L^2$$

$$f(t, h, k) = \delta_1 - \delta_2$$

Using these relational expressions and judging magnitude relation between the deformations in the case where the projection (rim guard portion) is provided on the entire beam as shown in FIG. 3 and in the case where it is provided on a part of the beam as shown in FIG. 4 while keeping the volume at the same, the following relation is obtained;

$$g(t, h, k) = (1/k^2)\{I_0 I_2 + 2(k-1) + I_1 I_2(k-1)^2 - I_0 I_1 k^2\}$$

The present inventors further conducted numerical analysis with substituting j=h/t and nondimesionalizing the thickness, and found that the deflection and deformation could be suppressed more by the narrow and thick rim guard portion 13B as shown in FIG. 4 than by the wide and thin rim guard portion 13A as shown in FIG. 3.

Since the above-mentioned estimated results are obtained by modeling a part of the side portion of the tire as a simple form in terms of the strength of material, the present inventors experimentally manufactured and tested tires according to the above-mentioned ideas. Then they were dedicated to study an optimization of the rim guard portion which can effectively suppress a deformation of the sidewall portion under a limited volume (weight) of the rim guard portion and can exert an improved durability.

As a result, the runflat durability while continuously running under a runflat condition due to a low tire pressure or a puncture can be successfully and effectively improved without sacrificing other characteristics especially such as riding comfort during an ordinal driving at normal internal pressure by, according to the first aspect, forming the rim guard portion 13 by a hard rubber and making a 100% modulus of the hard rubber not less than 3.0 MPa and within a range from two to five times as much as that of an outer skin rubber 14 constituting the sidewall portion 4, or by, according to the second aspect, arranging at least one composite reinforcing layer 16 consisting of a rubber containing reinforcing elements at a position adjacent to at least a part of a circumferential surface 15 of the rim guard potion 13, or by, according to the third aspect, forming the rim guard portion 13 by a hard rubber, making a 100% modulus of the hard rubber not less than 3.0 MPa and within a range from two to five times as much as that of a outer skin rubber constituting the sidewall portions 4, and arranging at least one composite reinforcing layer 16 consisting of a rubber containing reinforcing elements within the rim guard portion 13 or at a position adjacent to at least a part of a circumferential surface of the rum guard portion 13.

The reason of the 100% modulus of the hard rubber constituting the rim guard portion 13 being not less than 3.0 MPa in the first aspect is that the rim guard portion 13 is hardly deformed with setting the 100% modulus not less than 3.0 MPa to be able to reduce a local deformation of the tire's sidewall portion, and especially of a circumferential shearing deformation of the reinforcing rubber 11 during the runflat running. In addition, a contribution of an increase of the stiffness of the rim guard portion 13 to the longitudinal spring rate of the tire at normal internal pressure is less than that of the reinforcing rubber 11, so that such a tire has lower longitudinal-spring stiffness (tire's circumferential stiffness) and better riding comfort during an ordinal driving at normal internal pressure than a conventional tire having an equivalent runflat durability.

The above-mentioned constitution of the first aspect alone is, however, not sufficient in terms of the durability. Therefore, in order to minimize risks such as a separation due to rubber properties of the outer skin rubber constituting the sidewall portion and the rubber constituting the rim guard portion while sufficiently exert the effect of the present invention, it is necessary to make the 100% modulus of the hard rubber constituting the rim guard portion two to five times as much as the 100% modulus of the outer skin rubber constituting the sidewall portion in the first aspect. That is, a balance of the riding comfort at the ordinal internal pressure and the runflat durability can be optimized by limiting the 100% modulus of the hard rubber constituting the rim guard portion within two to five times as much as that of the outer skin rubber constituting the sidewall portion.

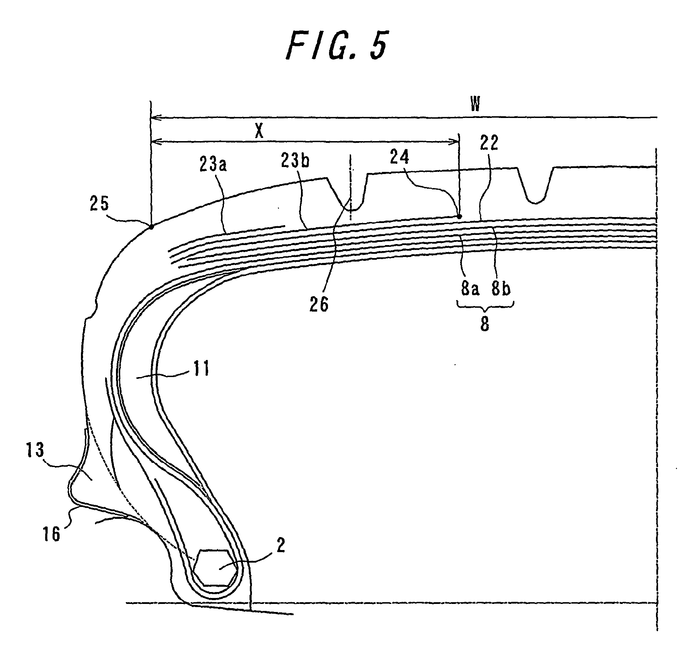

In the second aspect, unlike the first aspect, the rubber constituting the rim guard portion 13 is not limited as shown in FIG. 5. Instead, at least one composite reinforcing layer 16 consisting of a rubber containing reinforcing elements is arranged at a position adjacent to at least a part of a circumferential surface 15 of the rim guard portion 13. That is, although a rubber placed at the side portion is compressed and tends to move to the outside of the outer skin or other part of the tire, which move is so-called bulging deformation, when the side portion is largely deflected, the swelling of the rubber can be prevented and thus the longitudinal spring rate at the runflat condition can be effectively suppressed. As a result, the tire of the second aspect can exert the same effect as the first aspect. It is noted that the arrangement of the composite reinforcing layer 16 has little effect on the longitudinal spring rate during an ordinal driving at normal internal pressure and thus good riding comfort at the normal running can be maintained. As used herein, the terms "a circumferential surface of the rim guard portion" refers to both the external circumferential surface 15a and internal circumferential surface 15b of the rim guard portion 13 as shown in FIG. 1.

Furthermore, if both of the optimization of the 100% modulus of the hard rubber and the arrangement of the composite reinforcing layer 16 are satisfied as in the third aspect, the runflat durability can be further improved by a synergistic effect thereof. In the third aspect, all of the rim guard portion 13 in FIG. 5 may be formed from the hard rubber. Rubber is generally incompressible material which hardly changes its volume at the time of deformation and it is known that a combination of the rubber and the reinforcing layer may significantly enhance the compressive stiffness as compared with using the rubber alone, due to the synergistic effect. Therefore, when the rim guard portion 13 is formed with an inner rubber section 31 consisted of hard rubber and located inside of the tire's width direction and an outer rubber section 32 consisted of soft rubber and located outside of the tire's width direction, a deformation of the inner rubber section can be prevented by the composite reinforcing layer to enhance the stiffness of the entire rim guard portion, and a shredding of the outer rubber section due to a large bumping as well as an exposure of the composite reinforcing layer due to a slight rubbing of the rim can be prevented to maintain an appearance of the tire. In addition, when the rim guard portion 13 has the above-mentioned configuration, the transversal stiffness of the tire is enhanced at the same time, thereby improving a cornering performance.

The hard rubber constituting the inner rubber section 31 preferably has a 100% modulus of not less than 3.0 MPa, and the soft rubber constituting the outer rubber section 32 preferably has a 100% modulus of less than 3.0 MPa. If the 100% modulus of the hard rubber constituting the inner rubber section 31 is not less than 3.0 MPa, the rim guard portion 13 is hardly deformed. If the 100% modulus of the soft rubber constituting the outer rubber section 32 is less than 3.0 MPa, the effect of preventing the composite reinforcing layer from being exposed can be enhanced even when the rim guard portion rubs or contacts with a curbstone or the like.

Moreover, the volumetric rate of the inner rubber section 31 with respect to the entire rim guard portion 13 is preferably not less than 40%, because the stiffness of the rim guard portion 13 can be sufficiently secured and is hardly deformed even if a large bumping is applied.

The inner rubber section 31 is preferably formed by extending a rubber chafer 33 to the radially outward direction, and the outer rubber section 32 is preferably formed by extending an outer skin rubber 14 constituting the sidewall portion 3 to the radially inward direction. With these configurations, no new member is necessarily added, so that the productivity can be improved.

The composite reinforcing layer 16 is preferably arranged between the inner rubber section 31 and the outer rubber section 32. By arranging the composite reinforcing layer 16 to be adjacent to the inner rubber section 31, the deformation of the inner rubber section 31 can be more effectively suppressed, so that the compressive stiffness of the rim guard portion 13 can be further enhanced, and the arrangement becomes easier as the composite reinforcing layer 16 may be put between the inner rubber section 31 and the outer rubber section 32 when they are laminated in building of the tire.

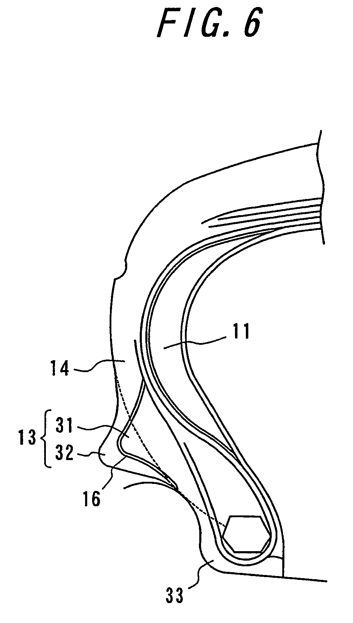

If the sectional shape of the inner rubber section 31 is complicated shape such as a generally similar shape as the sectional shape of the rim guard portion 13 as shown in FIG. 6, the reinforcing elements constituting the composite reinforcing layer 16 is preferably nonwoven fabric. When the reinforcing elements constituting the composite reinforcing layer 16 are formed by nonwoven fabric, the composite reinforcing layer 16 can easily change its shape to adapt to the irregular sectional shape and thus its arrangement becomes easier. As the nonwoven fabric, aramid, polyethylene terephthalate (PET), polyethylene naphthalate (PEN) and the like may be employed.

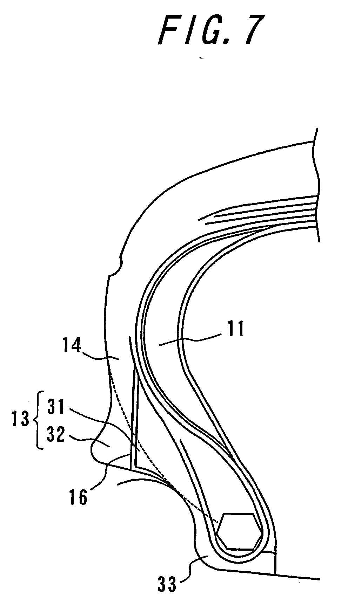

FIG. 7 shows a principal part of another pneumatic tire according to the third aspect of the present invention depicted in a state where the tire is mounted on a rim. As shown in FIG. 7, when the sectional shape of the inner rubber section 31 is simple, the reinforcing elements constituting the composite reinforcing layer 16 is preferably steel or organic cords. When the sectional shape of the inner rubber portion 31 has few concavities and convexities, even the composite reinforcing layer using the steel or organic cords may be easily arranged and besides an effect of suppressing a volumetric deformation of the inner rubber section 31 is larger than that of the nonwoven fabric.

Although FIGS. 6 and 7 show embodiments in which the composite reinforcing layer 16 extending in the sidewall portion 4, the composite reinforcing layer 16 may only be embedded in the position adjacent to at least a portion of the exterior surface of the inner rubber section 31 and does not necessarily extend in the sidewall portion 4.

The reinforcing elements constituting the composite reinforcing layer 16 may be aligned along a specific direction similar to cords in a rubber coated cord layer. However, the nonwoven fabric without an anisotropy is preferable used to effectively enhance the bending and torsion stiffness in terms of the material science. In addition, the reinforcing elements constituting the composite reinforcing layer 16 is preferably a filament fiber having a fiber diameter of 0.01-1 mm and a fiber length of not less than 1 mm, such as an aramid fiber or a polyethylene terephthalate (PET) fiber, and more preferably an aramid fiber having a high stiffness.

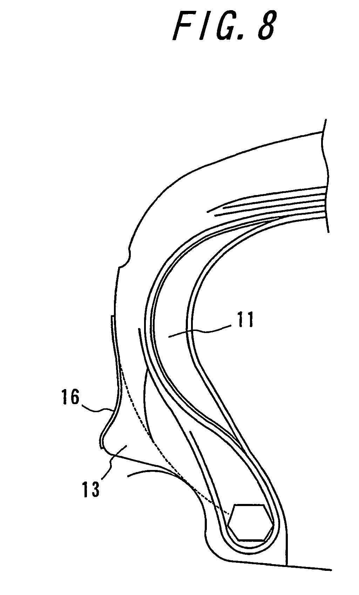

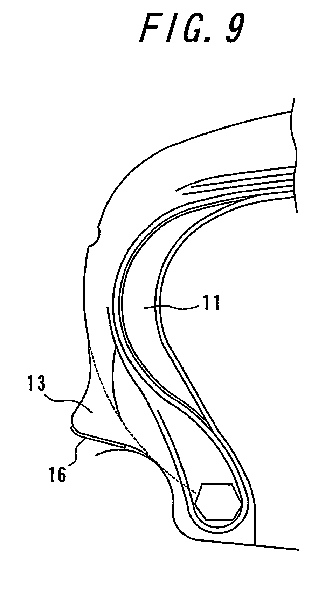

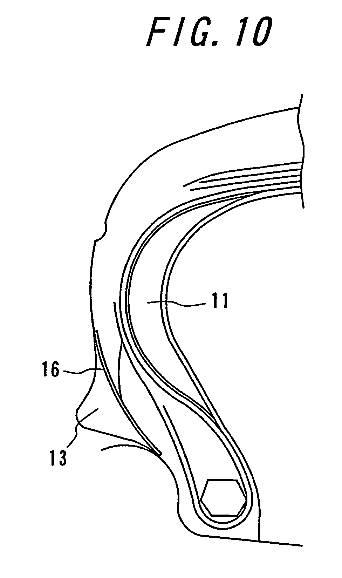

The composite reinforcing layer 16 may be arranged at a position adjacent to at least a part of the circumferential surface 15 of the rim guard portion 13. The composite reinforcing layer 16 is preferably so disposed that it wraps around the outer circumferential surface 15a of the rim guard portion 13, for example, as shown in FIG. 5 in terms of effectively suppressing the swelling deformation of the rubber at the time of deflection during the runflat running. It may be, however, disposed only on the upper exterior surface of the rim guard portion 13 as shown in FIG. 8, or only on the lower exterior surface of the rim guard portion 13 as shown in FIG. 9, or only on the interior surface 15b of the rim guard portion 13 as shown in FIG. 10.

As used herein, disposing the composite reinforcing layer to wrap around the exterior surface 15a of the rim guard portion 13 specifically means that the disposed position of the reinforcing elements of the composite reinforcing layer locates in the exterior surface side from the position corresponding to 70% of the rim guard height hmax and between the position of the exterior circumferential surface 15a and the position within 3 mm therefrom and in the rim guard portion. The composite reinforcing layer 16 itself may be provided on the exterior circumferential surface 15a of the rim guard portion 13 or may be embedded in the rim guard portion 13

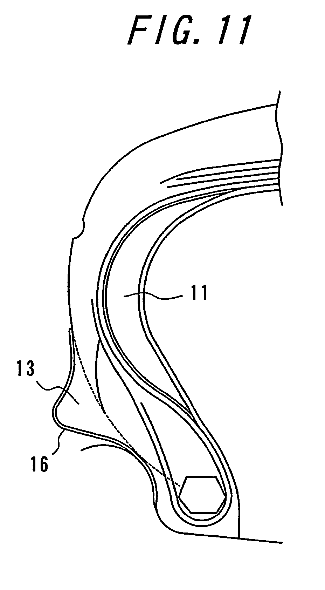

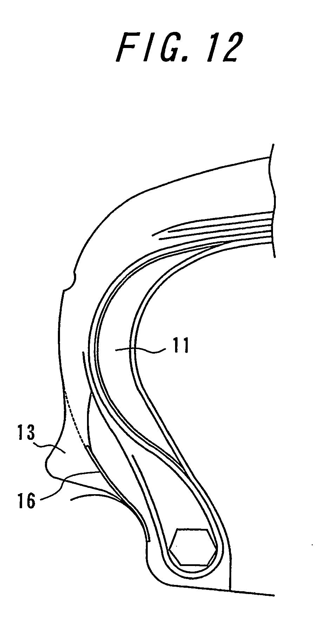

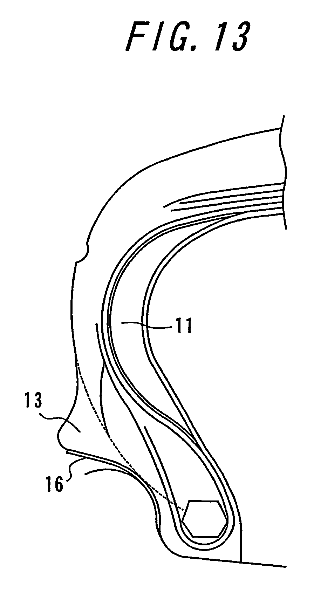

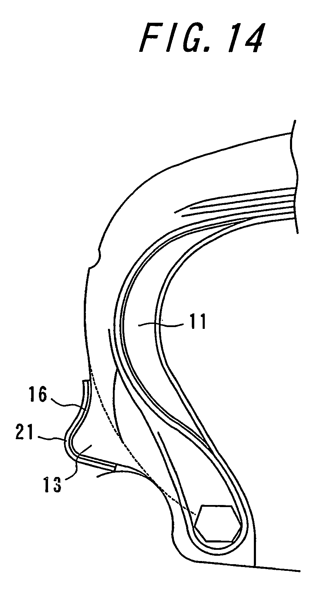

When the composite reinforcing layer 16 is desired to prevent damage due to a contact between the exterior surface of a bead and a rim, the layer may extend across the circumferential surface 15 o the rim guard portion 13 and the exterior surface of the bead portion contacting the rim R, as shown in FIGS. 11-13. Further, in the case where the composite reinforcing layer 16 is disposed on the exterior surface 15a of the rim guard portion 13 and where a surface appearance, weather resistance and the like of the tire need to be improved, a rubber layer 21 may be provided to cover the composite reinforcing layer, as shown in FIG. 14.

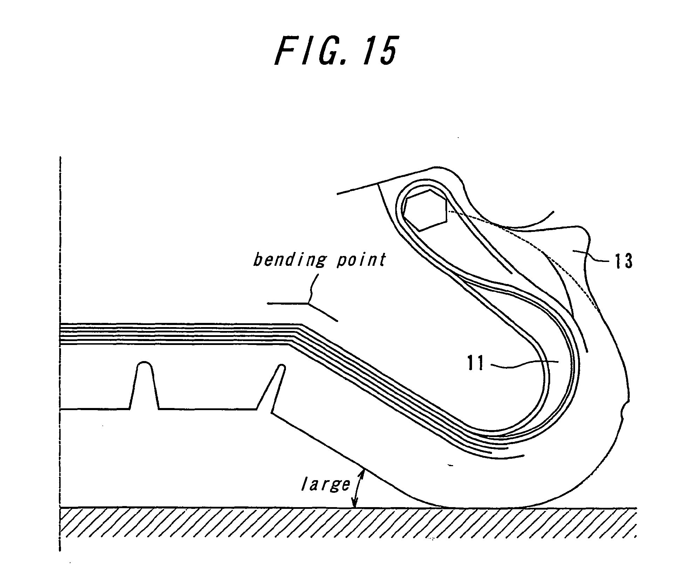

From the view point of improving a high-speed durability and the like, at least one wide reinforcing belt 22 covering the entire exterior surface of the belt 8 may be provided and at least a pair of narrow reinforcing belts, two pairs of narrow reinforcing belts 23a, 23b in FIG. 5 in which cords extending in parallel to the tire's circumferential direction may be arranged at the positions covering either end portions of the belt 8. In this case, for at least one pair of narrow reinforcing belt 23b of the narrow reinforcing belts 23a, 23b, a distance X measured from the tread end position 25 to the inner end position 24 of the belt 23b along the tire's width direction is preferably not less than 1/4 of the tread width W, from the view point of reducing the strain of the reinforcing rubber 11. That is, in the conventional runflat tire, a buckling (lifting deformation) tends to occur in the tread portion neighboring the buttress portion near the reinforcing rubber during the runflat running as shown in FIG. 15. Such a buckling can be prevented by setting the distance X measured from the tread end position 25 to the inner end position 24 of the belt 23b along the tire's width direction to not less than 1/4 of the tread width W, thereby further improving the runflat durability.

In addition, when a plurality of circumferential main grooves 12a, 12b extending along the tire's circumferential direction are provided on the tread portion 5, a local bending deformation as shown in FIG. 15 tends to occur with the position of the outermost circumferential main groove 12b in the tire's width direction being as its beginning. In this case, when an inner end 24 of a narrow reinforcing belt 23b is disposed inside of a groove central position 26 of the outermost circumferential main groove 12b in the tire's width direction, such a bending deformation hardly occurs to further improve the runflat durability.

It is generally thought that a uniform gauge distribution without any significant difference from the buttress portion to the bead portion is a desirable in terms of the basic configuration of a tire. The present inventors, however, found that when more rubber is applied to the tire having generally uniform gauge distribution to improve the durability, the durability can be effectively improved not by uniformly increasing the entire gauge thickness without any particular reason, but by intensively increasing the gauge thickness of the principal part. As a result, the present inventors also found that the deflection and deformation of the side portion of the tire can be suppressed to effectively improve the durability when the ring-shaped rim guard portion 13 projecting outwardly in the tire's width direction is so provided within a specific area 20 on the exterior surface 4a of the tire extending from the tire's maximum width position 17 on the exterior surface 4a to the highest position 19 of the exterior surface which contacts the exterior surface 18 of the rim flange that its maximum height hmax has a given proportion to the tire thickness t. That is, on condition that the tire thickness t within the above-mentioned specific area 20 is as uniform as possible, and more specifically that when an arc is drawn to circumscribe both the tire's maximum width position 17 and the exterior surface 18 of the rim flange and the arc is assumed as a reference arc C approximating the contour of the exterior surface 4a of the specific area 20 (excluding the rim guard portion 13), a ratio of the minimum value to the maximum value of the tire thickness t, which are measured on a plurality of normal lines perpendicular to the reference arc C within the specific area 20 ranges from 0.8 to 1.0, and the maximum height hmax of the rim guard portion, which is the distance between the reference arc C and the top face 28 of the rim guard portion 13 measured along on the normal line m drawn from the reference arc, is preferably 0.52-1.40 times as much as the tire thickness measured on the same normal condition. With these configurations, the deflection and deformation of the side portion of the tire can be suppressed to further improve the durability. When the maximum height hmax of the rim guard portion 13 is less than 0.52 times of the tire thickness t, the effect of improving the durability is small. On the other hand, when it exceeds 1.40 times of the tire thickness t, the deflection and deformation remain the same but the durability may be reduced.

Provided that the volume of the rim guard portion 13 remains constant, limiting the maximum height hmax of the rim guard portion 13 within a range of 0.58-1.20 times as much as the tire thickness t measured on the same normal line can further improve the durability. The sectional area of the rim guard portion 13 is preferably 0.4-1.5 cm$^2$ ($0.4 \times 10^{-4}$-$1.5 \times 10^{-4}$m$^2$) as viewed in a section in the tire's width direction.

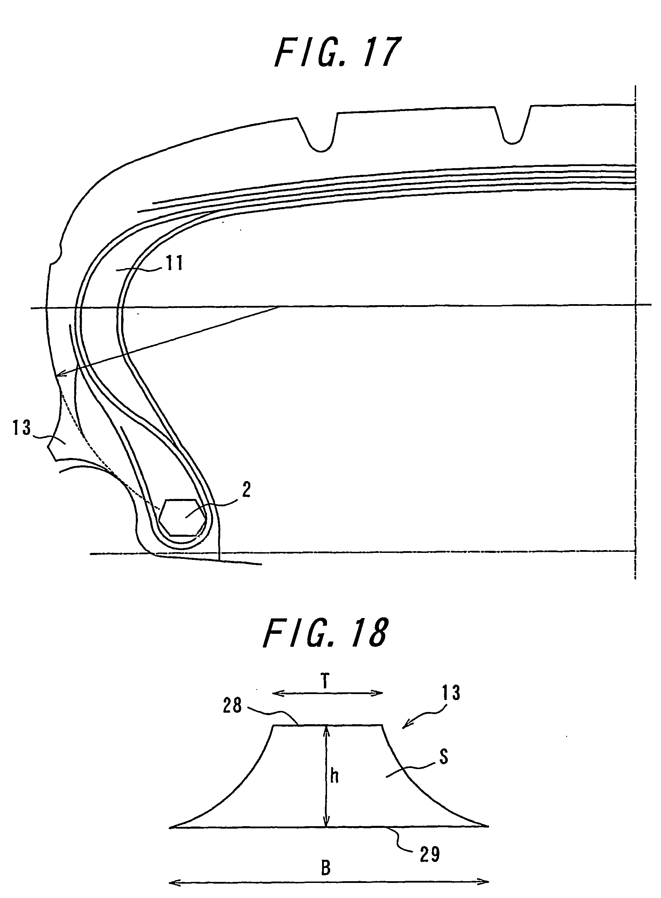

As shown in FIG. 18, the average height ha of the rim guard portion 13, which is obtained by dividing the sectional area S of the rim guard portion 13 in the cross section taken along the tire's width direction by the length B of the bottom 29 of the rim guard portion 13 on the reference arc C, is preferably not less than 0.6 times and less than 1.0 times as much as the maximum height of the rim guard portion.

In the present invention, it is important to optimize the height (thickness) distribution of the rim guard portion 13. In order that the arrangement of the rim guard portion directly contributes the increase of the bending stiffness, it is desirable that thin-wall portions at which the height of the rim guard portion 13 is low are present as little as possible. To this end, the average height ha of the rim guard portion 13 is preferably not less than 0.6 times of the maximum height hmax of the rim guard portion 13. Further, the average height ha of the rim guard portion 13 is preferably less than 1.0 time of the maximum height hmax of the rim guard portion 13, since more effects of increasing the stiffness can be exerted when the length B of the bottom 29 is longer than the length T of the top face 28 of the rim guard portion 13.

The rim guard portion 13 preferably has a generally trapezoidal sectional shape (FIG. 17) or a generally triangle sectional shape (FIG. 1). When the rim guard portion 13 has a generally trapezoidal sectional shape, the top face 28 of the rim guard portion 13 is preferably shaped in flat and the length T of the top face of the rim guard potion 13 in a section in the tire's width direction is more preferably within a range of 0.14-0.90 times as much as the length B of the bottom. If it is less than 0.14 times, the upper side of the trapezoid is small and thus the effect of the beam becomes smaller. If, on the other hand, it exceeds 0.90 times, the outer skin line extending between the side portion and the rim guard portion does not form a straight line, so that there is a risk of causing cracks.

A boundary portion 30 between the exterior surface 4a and the exterior circumferential surface 15a of the rim guard portion 13 is preferably formed a smooth curve, since stress tends to concentrate thereon.

The reinforcing rubber 11 having a 100% modulus of not less than 4 MPa is preferred in terms of securing the riding comfort under the ordinal internal pressure, since it gives a relatively thin gauge thickness of the reinforcing rubber.

In addition, at least one ply of the plies constituting the carcass 7 preferably includes an organic fiber cord selected from the group consisting of 6-nylon, 66-nylon, polyethylene terephthalate, rayon, polyethylene naphthalate and aramid in terms of preventing folding of the carcass cord during the runflat running.

Although illustrative embodiments of the present invention have been described above, variations and modifications may be made without departing from the scope of the invention as defined by the appended claims. For example, the present invention reduces a local deformation of the reinforcing rubber by optimizing the rim guard, so that the riding comfort during an ordinal driving at normal internal pressure can be improved by using softer reinforcing rubber than the conventional one, or the weight of the tire can be reduced by decreasing the thickness of the reinforcing rubber.

EXAMPLES

Pneumatic tires according to the present invention were experimentally manufactured and their performances were evaluated. The details will be described below.

(Test tires)

Tires of Examples were reinforced sidewall type tires having the tire size of 215/45ZR17 and had parameters shown in Table 1. In each of these tires, the carcass consisted of one turned carcass ply, the belt consisted of two rubber coated cord layers which were so stacked that cords were declined 26 degrees with respect to the tire's circumferential direction and were intersected between the layers, the reinforced belts were one wide reinforcing belt and two narrow reinforcing belts, four circumferential main grooves were provided on the tread portion, and the pair of narrow reinforcing belt were so arranged that their inner ends were placed inside of the width center positions of the circumferential main grooves in the tire's width direction. In the tire of Example 11, the rim guard portion had an inner rubber section consisted of hard rubber having a 100% modulus of 6.0 MPa and an outer rubber section consisted of soft rubber having a 100% modulus of 1.6 MPa, the volumetric proportion of the inner rubber section to the outer rubber section was 50:50, and a composite reinforcing layer was arranged between the inner and outer rubber sections. Other configurations of these tires were similar to an ordinal runflat tire (pneumatic tire) for a passenger vehicle.

(Evaluations)

The above-mentioned test tires were equipped on standard rims and running tests on a drum were conducted under experiment conditions of the internal pressure of 0 kPa (relative pressure), the loading of 4.17 kN and the driving speed of 90 km/h. The traveling distances until the tires were broken were measured and the runflat durability was evaluated from the measured distances. The longitudinal spring rates were calculated at the internal pressure of 230 kPa and the loading of 3.7 kN and the riding comfort during an ordinal driving at normal internal pressure was evaluated from the calculated rates. For the purpose of reference, the tire weights and appearances of the rim guard portions were also evaluated. The evaluation of the appearances of the rim guard portions were conducted in the following way: the above-mentioned test tires were equipped on standard rims to form tire/wheel assemblies and then they were installed on test vehicles; the internal pressure of 230 kPa (relative pressure) and loading of 4.17 kN were applied; the vehicles were driven at 10 km/h to hit the test tires at 75 degrees against curbstones of 10 cm high placed on the road; then damages of the rim flanges and the appearances of the rim guard portions were visually inspected.
The results of the evaluations are shown in Table 1.
The results in Table 1 are represented by index values with the results of the tire of Conventional Example being set to 100. The larger the result is, the better the runflat durability is. The smaller the results are, the better the riding comfort and weight are. The appearances of the rim guard portions are evaluated in three grades A, B and C. A is the best result and C is the worst result.

Table 1

| | Conventional Example | Comparison Example | Example 1 | Example 2 | Example 3 | Example 4 | Example 5 |
|---|---|---|---|---|---|---|---|
| Tire configuration | FIG. 19 | FIG. 17 | FIG. 1 | FIG. 1 | FIG. 1 | FIG. 1 | FIG. 5 |
| Modulus of Rim guard portion (MPa) | 1.6 | 1.6 | 6.0 | 3.2 | 6.0 | 6.0 | 1.6 |
| Modulus of Outer skin rubber constituting Sidewall portion (MPa) | 1.6 | 1.6 | 1.6 | 1.6 | 1.6 | 1.6 | 1.6 |
| Composite reinforcing layer | None | None | None | None | None | None | Nonwoven fabric |
| Maximum gauge thickness of Reinforcing rubber (mm) | 8.0 | 8.0 | 8.0 | 8.0 | 8.0 | 8.0 | 8.0 |
| Distance X (mm) | 30 | 30 | 30 | 30 | 40 | 60 | 30 |
| Distance X / Tread width W ratio (%), W = 160 mm | 19 | 19 | 19 | 19 | 25 | 33 | 19 |
| Inner end of Narrow reinforcing belt (with respect to Width center position of Outermost circumferential main groove) | Outside in width direction | Outside in width direction | Outside in width direction | Outside in width direction | Inside in width direction | Inside in width direction | Outside in width direction |
| Tire weight | 100 | 102 | 102 | 102 | 102 | 103 | 102 |
| Riding comfort during an ordinal running | 100 | 100 | 101 | 100 | 100 | 100 | 100 |
| Runflat durability | 100 | 102 | 140 | 125 | 145 | 152 | 140 |
| Appearance of Rim guard portion | - | A | A | A | A | A | B |

Table 1 (continued)

| | Example 6 | Example 7 | Example 8 | Example 9 | Example 10 | Example 11 |
|---|---|---|---|---|---|---|
| Tire configuration | FIG. 5 | FIG. 9 | FIG. 9 | FIG. 10 | FIG. 10 | FIG. 6 |
| Modulus of Rim guard portion (MPa) | 6.0 | 1.6 | 60 | 1.6 | 6.0 | 6.0/1.6 |
| Modulus of Outer skin rubber constituting Sidewall portion (MPa) | 1.6 | 1.6 | 1.6 | 1.6 | 1.6 | 1.6 |
| Composite reinforcing layer | Nonwoven fabric | Nonwoven fabric | Nonwoven fabric | Nonwoven fabric | Nonwoven fabric | Nonwoven fabric |
| Maximum gauge thickness of Reinforcing rubber (mm) | 8.0 | 8.0 | 8.0 | 8.0 | 8.0 | 8.0 |
| Distance X (mm) | 30 | 30 | 30 | 30 | 30 | 30 |
| Distance X / Tread width W ratio (%), W = 160 mm | 19 | 19 | 19 | 19 | 19 | 19 |
| Inner end of Narrow reinforcing belt (with respect to Width center position of Outermost circumferential main groove) | Outside in width direction | Outside in width direction | Outside in width direction | Outside in width direction | Outside in width direction | Outside in width direction |
| Tire weight | 102 | 101 | 101 | 101 | 101 | 101 |
| Riding comfort during an ordinal running | 100 | 100 | 100 | 100 | 100 | 100 |
| Runflat durability | 155 | 110 | 145 | 109 | 142 | 140 |
| Appearance of Rim guard portion | B | B | B | A | A | A |

As appreciated from the results shown in Table 1, all of Examples has a superior total balanced performance of runflat durability, riding comfort during an ordinal running and tire weight. In addition, the tires of Examples 1-4 and 9-11 maintain good appearances of the rim guard portions.

INDUSTRIAL APPLICABILITY

According to the present invention, it is possible to provide a runflat tire having an effectively improved runflat durability while continuously running under a runflat condition due to a low tire pressure or puncture, without sacrificing other characteristics such as riding comfort during an ordinal driving at normal internal pressure.

**Claims**

1.   A runflat tire comprising a belt consisting of at least one rubber-coated cord layer laid between a crown portion of a carcass and a tread portion, the carcass consisting of at least one ply toroidally extending over a pair of bead portions in which bead cores are embedded, a pair of sidewall portions extending radially outwardly from the bead portions, and a tread portion extending across the sidewall portions; a reinforcing rubber which has a generally crescent sectional shape and is arranged at the interior surface side at least of sidewall portions; and a ring-shaped rim guard portion protruding outwardly in the tire's width direction arranged at the exterior surface position of the tire immediately above a rim flange in a state where the tire is applied on a standard rim, the tire being **characterized in that**
       the rim guard portion is formed by a hard rubber, and
       a 100% modulus of the hard rubber is not less than 3.0 MPa and within a range from two to five times as much as that of an outer skin rubber constituting the sidewall portions.

2.   A runflat tire comprising a belt consisting of at least one rubber-coated cord layer laid between a crown portion of a carcass and a tread portion, the carcass consisting of at least one ply toroidally extending over a pair of bead portions in which bead cores are embedded, a pair of sidewall portions extending radially outwardly from the bead portions, and a tread portion extending across the sidewall portions; a reinforcing rubber which has a generally crescent sectional shape and is arranged at the interior surface side at least of sidewall portions; and a ring-shaped rim guard portion protruding outwardly in the tire's width direction arranged at the exterior surface position of the tire immediately above a rim flange in a state where the tire is applied on a standard rim, the tire being **characterized in that**
       at least one composite reinforcing layer consisting of a rubber containing reinforcing elements is arranged at a position adjacent to at least a part of a circumferential surface of the rim guard portion.

3.   A runflat tire comprising a belt consisting of at least one rubber-coated cord layer laid between a crown portion of a carcass and a tread portion, the carcass consisting of at least one ply toroidally extending over a pair of bead portions in which bead cores are embedded, a pair of sidewall portions extending radially outwardly from the bead portions, and a tread portion extending across the sidewall portions; a reinforcing rubber which has a generally crescent sectional shape and is arranged at the interior surface side at least of sidewall portions; and a ring-shaped rim guard portion protruding outwardly in the tire's width direction arranged at the exterior surface position of the tire immediately above a rim flange in a state where the tire is applied on a standard rim, the tire being **characterized in that**
       at least a part of the rim guard portion is formed by a hard rubber,
       a 100% modulus of the hard rubber is not less than 3.0 MPa and within a range from two to five times as much as that of a outer skin rubber constituting the sidewall portions, and
       at least one composite reinforcing layer consisting of a rubber containing reinforcing elements is arranged within the rim guard portion or at a position adjacent to at least a part of a circumferential surface of the rum guard portion.

4.   The runflat tire according to claim 3, wherein the rim guard portion has an inner rubbers section located in the inner side in the tire's width direction and consisting of a hard rubber, and an outer rubber section located in the outer side in the tire's width direction and consisting of a soft rubber.

5.   The runflat tire according to claim 4, wherein the hard rubber constituting the inner rubber section has a 100% modulus of not less than 3.0 MPa, and the soft rubber constituting the outer rubber section has a 100% modulus of less than 3.0 MPa.

6. The runflat tire according to claim 4 or 5, wherein the volume percent of the inner rubber section with respect to the entire rim guard portion is not less than 40%.

7. The runflat tire according to claim 4, 5 or 6, wherein the inner rubber section is formed by extending a rubber chafer to the radially outward direction, and the outer rubber section is formed by extending the outer skin rubber constituting the sidewall portion to the radially inward direction.

8. The runflat tire according to any one of claims 4-7, wherein the composite reinforcing layer is placed between the inner and outer rubber sections.

9. The runflat tire according to any one of claims 2-8, wherein the reinforcing elements constituting the composite reinforcing layer are nonwoven fabrics.

10. The runflat tire according to any one of claims 2-9, wherein the reinforcing elements constituting the composite reinforcing layer are filament fibers having a fiber diameter of 0.01-1 mm and a fiber length of not less than 1 mm.

11. The runflat tire according to any one of claims 2-10, wherein the composite reinforcing layer is so disposed that it wraps around the outer circumferential surface of the rim guard portion.

12. The runflat tire according to any one of claims 1-11, wherein a pair of narrow reinforcing belts in which cords extends in parallel to the tire's circumferential direction are provided at positions each covering an end of the belt, and that a distance measured from a tread width end position to the inner end position of the narrow reinforcing belt along the tire's width direction is not less than 1/4 of the tread width.

13. The runflat tire according to claim 12, wherein a plurality of circumferential main groove extending along the tire's circumferential direction are provided on the tread portion, and the narrow reinforcing belt is preferably so disposed that its inner end in the tire's width direction is laid inside from the width center line of the outermost circumferential main groove in the tire's width direction.

14. The runflat tire according to any one of claims 1-13, wherein the tire is mounted on a regulated rim and is inflated by a given air pressure, and, in a cross section of the tire/wheel assembly taken along the tire's width direction under an unloaded condition,
   said rim guard portion is provided within a specific area on the exterior surface of the tire, the area extending from the tire's maximum width position on the exterior surface to the highest position of the exterior surface which contacts the exterior surface of the rim flange,
   an arc is drawn to circumscribe both the tire's maximum width position and the exterior surface of the rim flange and the arc is assumed as a reference arc approximating the contour of the exterior surface of the specific area (excluding the rim guard portion),
   a ratio of the minimum value to the maximum value of the thickness of the tire, which are measured on a plurality of normal lines perpendicular to the reference arc within the specific area, preferably range from 0.8 to 1.0, and
   the maximum height of the rim guard portion, which is the distance between the reference arc and the top face of the rim guard portion measured on the normal lines drawn from the reference arc, is 0.52-1.40 times as much as the tire thickness measured on the same normal line as the maximum height.

15. The runflat tire according to claim 14, wherein the maximum height of the rim guard portion is 0.58-1.20 times as much as the tire thickness measured on the same normal line.

16. The runflat tire according to claim 14 or 15, wherein the average height of the rim guard portion, which is obtained by dividing the sectional area of the rim guard portion in the cross section taken along the tire's width direction by the length of the bottom of the rim guard portion on the reference arc, is not less than 0.6 times and less than 1.0 time as much as the maximum height of the rim guard portion.

17. The runflat tire according to claim 14, 15 or 16, wherein the rim guard portion has a generally trapezoidal sectional shape.

18. The runflat tire according to claim 17, wherein a top plane of the rim guard portion forms a flat surface.

**19.** The runflat tire according to claim 18, the length of the top plane of the rim guard portion in the cross section taken along the tire's width direction is 0.14- 0.90 times as much as said bottom lines.

**20.** The runflat tire according to claim 14, 15 or 16, wherein the rim guard portion has a generally triangle sectional shape.

**21.** The runflat tire according to any one of claims 1-20, wherein a boundary portion between the exterior surface of the tire and the exterior circumferential surface of the rim guard portion forms a smooth curve.

**22.** The runflat tire according to any one of claims 1-21, wherein the reinforcing rubber has a 100% modulus of not less than 4 MPa.

**23.** The runflat tire according to any one of claims 1-22, wherein at least one ply of the plies constituting the carcass includes an organic fiber cord selected from the group consisting of 6-nylon, 66-nylon, polyethylene terephthalate, rayon, polyethylene naphthalate and aramid.

*FIG. 1*

EP 1 604 839 A1

## FIG. 2

## FIG. 3

## FIG. 4

# FIG. 5

EP 1 604 839 A1

## FIG. 6

# FIG. 7

## FIG. 8

# FIG. 9

# FIG. 10

11

16

13

# FIG. 11

# FIG. 12

11

13

16

# FIG. 13

# FIG. 14

## FIG. 15

bending point

large

11

13

# FIG. 16

no bending point

13

11

small

# FIG. 17

# FIG. 18

EP 1 604 839 A1

# FIG. 19

| | | | |
|---|---|---|---|
| **INTERNATIONAL SEARCH REPORT** | | International application No. | |
| | | PCT/JP2004/003320 | |

**A.  CLASSIFICATION OF SUBJECT MATTER**
    Int.Cl⁷  B60C17/00, B60C15/06, B60C15/00, B60C9/22, B60C15/02

According to International Patent Classification (IPC) or to both national classification and IPC

**B.   FIELDS SEARCHED**

Minimum documentation searched (classification system followed by classification symbols)
    Int.Cl⁷  B60C1/00-19/12

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| X<br><br>Y | Microfilm of the specification and drawings annexed to the request of Japanese Utility Model Application No. 127811/1974(Laid-open No. 53602/1976) (Bridgestone Tire Co., Ltd.), 23 April, 1976 (23.04.76), Page 7, lines 6 to 12; Fig. 3 (Family: none) | 2,9-11,20, 21,23<br>22 |
| X<br><br>Y | JP 2002-513361 A  (Michelin Recherche et Technique S.A.), 08 May, 2002 (08.05.02), Page 13, lines 8 to 21; Fig. 1 & WO 98/56602 A1      & US 5868190 A & US 5968294 A | 2,9-11,20, 21,23<br>22 |

| | | |
|---|---|---|
| ☒  Further documents are listed in the continuation of Box C. | ☐   See patent family annex. | |

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| | |
|---|---|
| Date of the actual completion of the international search<br>    06 May, 2004 (06.05.04) | Date of mailing of the international search report<br>    25 May, 2004 (25.05.04) |
| Name and mailing address of the ISA/<br>    Japanese Patent Office | Authorized officer |
| Facsimile No. | Telephone No. |

**EP 1 604 839 A1**

| INTERNATIONAL SEARCH REPORT | International application No. |
|---|---|
| | PCT/JP2004/003320 |

C (Continuation).  DOCUMENTS CONSIDERED TO BE RELEVANT

| Category* | Citation of document, with indication, where appropriate, of the relevant passages | Relevant to claim No. |
|---|---|---|
| Y<br>A | JP 50-82701 A  (Toyo Tire and Rubber Co., Ltd.),<br>04 July, 1975 (04.07.75),<br>Page 2, lower left column, lines 8 to 13;<br>Figs. 5 to 6<br>& US 4061172 A          & FR 2250641 A | 1-3,12-23<br>4-8 |
| Y | JP 53-138106 A  (Toyo Tire and Rubber Co., Ltd.),<br>02 December, 1978 (02.12.78),<br>Fig. 1<br>& US 4365659 A1 | 1-3,12-23 |
| Y | JP 2003-63210 A  (Sumitomo Rubber Industries, Ltd.),<br>05 March, 2003 (05.03.03),<br>Fig. 1<br>& WO 02/102610 A1 | 12,13 |
| Y | JP 11-157310 A  (Bridgestone Corp.),<br>15 June, 1999 (15.06.99),<br>Figs. 1 to 2<br>(Family: none) | 17-19 |
| Y | JP 2001-277824 A  (Bridgestone Corp.),<br>10 October, 2001 (10.10.01),<br>Claims<br>(Family: none) | 22 |